# FASCICULE DE BREVET EUROPEEN

(11) **EP 1 279 450 B1**
(45) Date de publication et mention de la délivrance du brevet: **17.06.2009**
(21) Numéro de dépôt: 02354113.9
(22) Date de dépôt: 19.07.2002
(51) Int. Cl.: B22F 9/08, B07B 13/10

(54) **Dispositif de production de billes sphériques**
Vorrichtung zur Herstellung von sphärischen Kugeln
Device for the production of spherical balls

(30) Priorité: 26.07.2001 FR 0110007; 10.08.2001 FR 0110702
(43) Date de publication de la demande: 29.01.2003
(73) Titulaire: I.P.S. Industrie des Poudres Sphériques S.A., F-74100 Annemasse (FR)
(72) Inventeur: Chaleat, Bernard, 74160 Saint-Julien-en-Genevois (FR); Bechet, Louis, 74140 Sciez (FR)
(74) Mandataire: Jouvray, Marie-Andrée

(56) Documents cités:
- GB-A- 2 168 725
- US-A- 171 502
- US-A- 3 899 416
- US-A- 4 428 894
- US-A- 4 818 279
- PATENT ABSTRACTS OF JAPAN vol. 2000, no. 14, 5 mars 2001 (2001-03-05) & JP 2000 328112 A (SUMITOMO METAL MINING CO LTD), 28 novembre 2000 (2000-11-28)
- PATENT ABSTRACTS OF JAPAN vol. 1999, no. 10, 31 août 1999 (1999-08-31) & JP 11 128845 A (DAIZEN:KK), 18 mai 1999 (1999-05-18)

## Description

### Domaine technique de l'invention

L'invention concerne un dispositif de production de billes sphériques comportant :
- des moyens d'introduction, dans un récipient de fusion, de matériau destiné à constituer les billes,
- un second récipient communiquant avec le récipient de fusion de manière à recevoir le matériau fondu,
- des moyens pour former, à partir du matériau fondu contenu dans le second récipient, un jet à travers au moins un orifice,
- des moyens de vibration pour transmettre des vibrations à l'orifice, de manière à transformer le jet en gouttelettes,
- une tour de refroidissement, disposée à la sortie de l'orifice et remplie d'un gaz inerte, dans laquelle les gouttelettes, tombant par gravité, se solidifient pour former les billes,
et des moyens de réception des billes à une extrémité inférieure de la tour de refroidissement

### État de la technique

II existe de nombreux procédés et dispositifs de granulation, appliqués dans de nombreux domaines industriels, que ce soit dans la métallurgie, les fertilisants, l'industrie alimentaire ou pharmaceutique, etc... Ils ont tous pour objectif de transformer en billes des matériaux qui, fondus, ont, à l'air ou sous gaz neutre, une faible viscosité, une bonne tension superficielle, une bonne facilité à s'écouler au travers d'orifices et sont susceptibles d'être solidifiés par refroidissement.

À titre d'exemple, le document WO-A-8101811, correspondant au brevet US 4428894, décrit un procédé et un dispositif de fabrication de granulés métalliques, de 0,1 à 5 mm de diamètre, à partir d'un bain de métal en fusion. Selon ce procédé connu, on forme un jet de métal fondu, on le fait passer à travers un orifice vibrant pour diviser le jet en gouttes individuelles, on fait tomber les gouttes du jet par gravité à travers une atmosphère de gaz inerte, de manière à provoquer par refroidissement la solidification des gouttes en granulé.

Cependant, en pratique, il existe peu de procédés et dispositifs de granulation calibrés, c'est-à-dire capables de produire industriellement, avec un bon rendement, des billes de dimensions uniformes présentant un très bon état de surface. Par ailleurs, quel que soit le matériau (produit organique, métal...) granulé par ce type de technique, il arrive fréquemment qu'un certain pourcentage de la production soit constituée par des billes fortement déformées ou par des billes collées entre elles, souvent par paire, une telle paire étant nommée haltère.

Or, il est indispensable, pour certaines applications, de produire des billes, plus spécifiquement des microbilles, sans défaut de surface et avec une granulométrie très précise. Ces microbilles doivent, de préférence, non seulement avoir un diamètre uniforme mais aussi être parfaitement sphériques et isolées. Dans l'industrie mécanique, lorsque les billes sont constituées par un matériau de dureté relativement élevée, on utilise généralement des dispositifs de sélection, ou de tri, comportant des tamis, des rouleaux, etc... C'est le cas notamment des billes pour roulement, pour stylo, etc... Les billes peuvent alors supporter des chocs et des frottements sans que leur surface soit marquée. Par contre, dans certains cas, la sphéricité et l'état de surface des billes ne doivent pas être altérés par le dispositif de sélection.

C'est le cas, notamment, pour les billes d'alliage de soudure destinées à être utilisées en électronique pour former des connexions, par exemple pour des boîtiers du type BGA (« Ball Grid Array »), c'est-à-dire à réseau de billes. Or, les métaux utilisés dans les alliages de soudure sont des métaux tendres et l'état de surface d'une bille constituée par de tels métaux peut être très facilement altéré.

### Objet de l'invention

L'invention a pour but l'obtention de billes sans défaut de surface. Plus particulièrement, les billes doivent être parfaitement sphériques, avec un excellent état de surface, non oxydé. La composition des billes doit être très stable à l'intérieur de chaque lot de fabrication et les tolérances très resserrées en ce qui concerne la granulométrie.

Selon l'invention, ce but est atteint par le fait que le dispositif comporte une chambre de sortie dans le récipient de fusion et des moyens d'agitation par ultrasons du matériau fondu contenu dans la chambre de sortie avant son transfert dans le second récipient, le gaz inerte contenu dans la tour de refroidissement contenant une quantité prédéterminée d'oxygène.

Selon un développement de l'invention, les moyens de réception des billes comportent des moyens d'amortissement. Ceux-ci comportent, de préférence, des brosses constituées par des fils à base de polyamide, faisant un angle d'environ 45° avec la trajectoire des billes dans la tour de refroidissement. Des rouleaux en toile peuvent, de plus, être disposés sur la périphérie inférieure de la paroi interne de la tour de refroidissement, au-dessus des brosses

Selon un mode de réalisation préférentiel, le dispositif comporte, à la sortie de la tour de refroidissement, des moyens d'extraction périodique des billes et des moyens de calibrage comportant des moyens de tri des billes en trois catégories, en fonction de leurs dimensions. Il peut également comporter des moyens de pesage de l'ensemble des billes de chaque catégorie obtenues à chaque séquence d'extraction, des moyens de détermination, à partir d'informations fournies par les moyens de pesage, d'un pourcentage de billes dans des normes prédéterminées et des moyens d'ajustement de la fréquence des moyens de vibration en fonction dudit pourcentage.

L'invention a également pour objet un dispositif de production de billes sphériques avec un dispositif de sélection de billes sphériques permettant de trier des billes de diamètre uniforme, de manière à écarter la totalité des billes qui ne sont pas parfaitement sphériques.

Selon l'invention, ce but est atteint par le fait que le dispositif de sélection comporte des moyens d'amenée des billes sur un premier plan incliné d'une succession de plans inclinés, séparés par des espaces de dimensions prédéterminées, au moins le premier plan incliné, dans le sens de déplacement des billes, ayant une surface dont la rugosité est plus importante que celle des plans inclinés suivants.

Selon un mode de réalisation préférentiel, les moyens d'amenée des billes sur le premier plan incliné comportent un plan de roulement, des moyens de butée, des moyens d'éjection pour éjecter du plan de roulement, par saccades, les billes venant en butée contre les moyens de butée.

Les moyens d'éjection comportent, de préférence, une rampe creuse, animée d'un mouvement latéral de va-et-vient et munie d'une pluralité d'éjecteurs d'air répartis uniformément le long de la rampe.

Selon une autre caractéristique de l'invention, les moyens d'amenée des billes sur le premier plan incliné comportent un tapis roulant ayant une face inclinée dans la même direction que les plans inclinés et un sens de rotation opposé au sens de roulement des billes sur ladite face.

Un autre but de l'invention concerne l'élimination des billes collées entre elles.

Selon un développement de l'invention, cet autre but est atteint par le fait que le dispositif de sélection comporte, en aval des plans inclinés, une roue dentée animée d'un mouvement de rotation autour d'un axe incliné et comportant des rainures longitudinales dont les dimensions permettent le roulement d'une bille isolée et empêchent le roulement d'une paire de billes collées.

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés, dans lesquels :
La figure 1 représente schématiquement, en coupe, un mode particulier de réalisation d'un dispositif selon l'invention.
La figure 2 représente plus en détail la partie inférieure du creuset de granulation du dispositif selon la figure 1.
La figure 3 illustre plus en détail un mode de réalisation particulier d'un orifice de sortie du creuset de granulation selon la figure 2.
La figure 4 est une vue en coupe, selon A-A, d'un creuset de fusion selon la figure 1.
La figure 5 représente un mode particulier de réalisation d'un dispositif d'amortissement disposé à la partie inférieure de la tour de refroidissement d'un dispositif selon la figure 1.
La figure 6 est une vue en coupe, selon B-B, du dispositif d'amortissement de la figure 5.
La figure 7 représente, sous forme schématique, un mode de réalisation particulier d'un dispositif de calibrage et de pesage disposé à la sortie de la tour de refroidissement d'un dispositif selon la figure 1.
La figure 8 représente, sous forme schématique, un mode de réalisation particulier d'un dispositif de sélection d'un dispositif selon l'invention.
Les figures 9 et 10 représentent plus en détail, respectivement en vue de côté et en vue de dessus, un mode particulier de réalisation de la partie du dispositif située en amont des plans inclinés du dispositif de sélection selon la figure 8.
La figure 11 représente un mode particulier de réalisation du plan de roulement de sortie de la trémie d'un dispositif selon la figure 10, vu de l'extrémité libre du plan de roulement.
Les figures 12 et 13 illustrent les positions respectives de la rampe mobile et du plan de roulement de sortie de la trémie pour deux positions extrêmes de la rampe.
La figure 14 représente, en coupe, la roue dentée du dispositif de sélection selon la figure 8.
La figure 15 illustre le positionnement d'une paire de billes bloquées à l'intérieur d'une rainure de la roue dentée selon la figure 14.

### Description de modes particuliers de réalisation

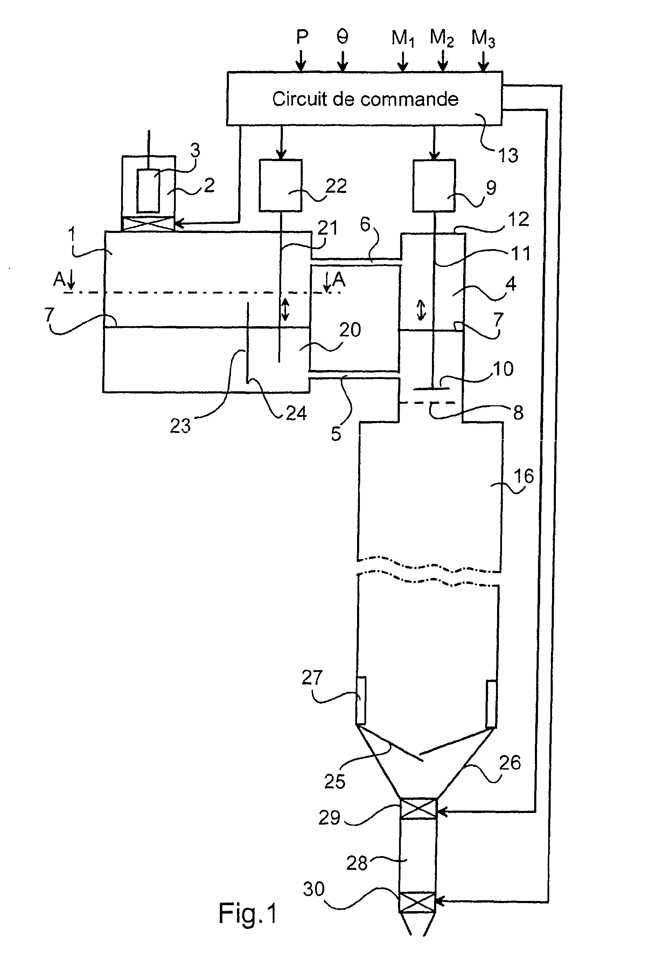

Le dispositif selon la figure 1 comporte un récipient ou creuset de fusion 1, chauffé par tout moyen approprié (non représenté), dans lequel le matériau destiné à constituer les billes peut être introduit, sous forme d'alliage solide, par l'intermédiaire d'un sas d'alimentation 2. Le matériau, introduit sous forme de billettes, de lingots ou de barres 3, est fondu dans le récipient de fusion. Un second récipient ou creuset de granulation 4, également chauffé par tout moyen approprié (non représenté), est relié, à sa base, à la base du creuset de fusion 1 par au moins un tube de transfert 5. Un tube de liaison 6 relie les parties supérieures des creusets 1 et 4, au-dessus du niveau 7 du matériau fondu, de manière à ce que la pression P de l'atmosphère gazeuse surmontant le matériau fondu soit identique dans les deux creusets. De plus, un détecteur de niveau (non représenté), est relié au système d'introduction des lingots de manière à maintenir constant le niveau du matériau fondu dans les creusets 1 et 4.

Le creuset de granulation 4 comporte classiquement, à sa partie inférieure, au moins un orifice 8 de diamètre prédéterminé, au travers duquel l'alliage fondu s'écoule sous forme de jet. Un vibrateur 9, fixé sur le couvercle du creuset de granulation 4, transmet des vibrations aux orifices 8 par l'intermédiaire d'une palette vibrante 10, qui est animée d'un mouvement vertical de va-et-vient. De manière connue, la palette vibrante 10 est connectée au vibrateur 9, par exemple de type électromagnétique, par une tige métallique 11 qui traverse le couvercle 12 du creuset de granulation 4 par un passage étanche. La fréquence des vibrations est comprise entre 200Hz et 10.000Hz, de préférence entre 200Hz et 6.000Hz.

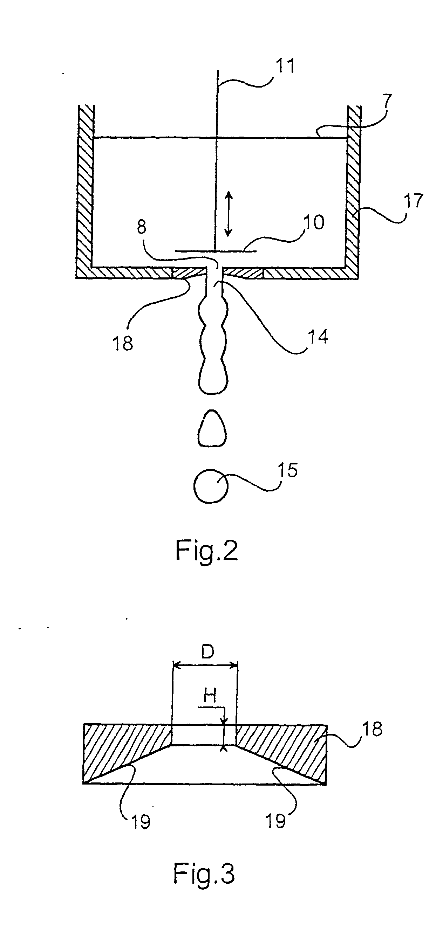

Le matériau, par exemple un alliage métallique de soudure, est fondu dans le creuset de fusion 1, puis transféré sous forme liquide, par le tube de transfert 5, dans le creuset de granulation 4. La pression P de l'atmosphère gazeuse (azote par exemple) surmontant le matériau fondu est mesurée en permanence et régulée par un circuit de commande 13, de manière à imprimer une vitesse prédéterminée (de préférence entre 0,5 et 5 m/s selon le diamètre de l'orifice) à un jet de matériau fondu traversant chaque orifice 8 à la partie inférieure du creuset de granulation. Les vibrations de la palette vibrante 10 se transmettent au jet 14, laminaire, sortant de l'orifice 8. Comme représenté à la figure 2, le jet 14 se divise alors en gouttelettes 15 dont le diamètre est déterminé principalement par le diamètre D de l'orifice 8 (de préférence compris entre 80 et 800µm). Les gouttelettes tombent, par gravité, à l'intérieur d'une tour de refroidissement 16, remplie d'un gaz inerte dans laquelle elles se solidifient pour former des billes sphériques. L'utilisation d'hélium, sous une pression comprise entre 30mbars et plus de 100mbars, de préférence de l'ordre de 50mbar, parfaitement régulée à ±1mbar, permet un refroidissement rapide des billes, en 2 à 3s par exemple. La hauteur de la tour de refroidissement 16 est classiquement de plusieurs mètres, 7m par exemple. Un autre gaz inerte peut bien sûr être utilisé. Cependant, l'utilisation d'azote ou d'argon impliquerait l'utilisation d'une tour environ deux fois plus haute.

Un ou plusieurs orifices 8, circulaires, de diamètre D, sont de préférence formés dans un matériau qui n'est pas mouillable par le matériau fondu les traversant et dont la tension de surface annule la tension superficielle du matériau à granuler. À titre d'exemple, les orifices 8 sont réalisés dans du saphir ou du rubis. Dans un mode particulier de réalisation illustré aux figures 2 et 3, la paroi 17 du creuset de granulation 4 est en acier inoxydable et comporte à sa partie inférieure un insert 18, en saphir ou en rubis, dans lequel est formé au moins un orifice 8. Chaque orifice 8 est délimité par une paroi verticale, de hauteur H inférieure ou égale au diamètre D. Dans un mode de réalisation préférentiel, D = 450µm et H = 190µm. Dans le mode de réalisation particulier des figures 2 et 3, l'orifice 8 s'élargit dans sa partie inférieure où il est délimité par des parois 19 inclinées ou courbes de l'insert 18.

Selon l'invention, le creuset de fusion 1 comporte une chambre de sortie 20 dans laquelle le matériau fondu est soumis à une agitation par ultrasons. Cette agitation peut être réalisée au moyen d'un barreau 21 plongé dans le matériau fondu contenu dans la chambre de sortie 20 et animé d'un mouvement vertical de va-et-vient par un dispositif vibrant 22, par exemple de type piézoélectrique.

Cette agitation par ultrasons, par exemple à une fréquence comprise entre 20KHz et 30KHz, permet d'améliorer de façon substantielle l'état de surface des billes. Cette agitation ne peut être réalisée dans le creuset de granulation 4 car elle perturberait l'écoulement du matériau fondu à travers les orifices 8. Cette agitation provoque essentiellement une homogénéisation du matériau fondu avant son introduction dans le creuset de granulation 4. Cette agitation est effectuée uniquement dans la chambre de sortie 20, c'est-à-dire dans une partie du creuset de fusion 1 située à proximité de la sortie du matériau fondu en direction du creuset de granulation 4 et dans laquelle tout le matériau est déjà fondu.

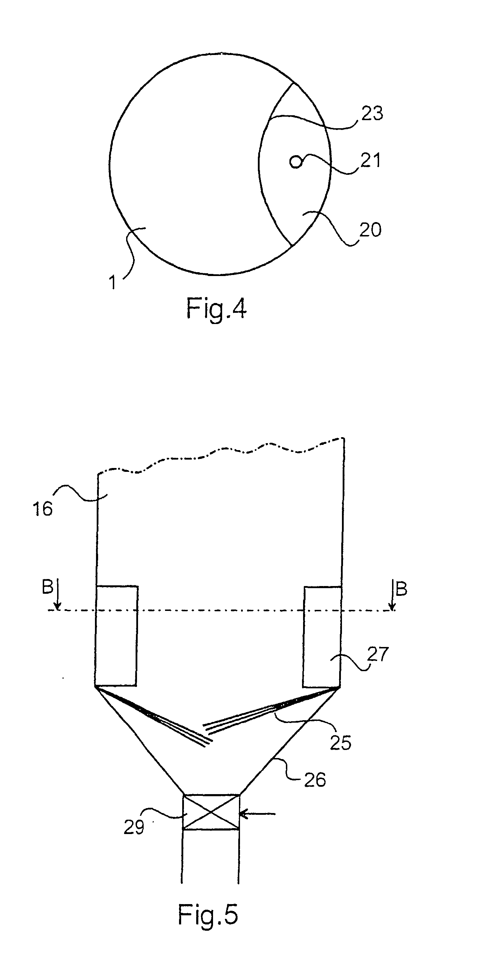

Dans un mode de réalisation préféré, illustré à la figure 4, la chambre de sortie 20 a un volume inférieur à environ 20% du volume du creuset de fusion 1. Une paroi 23, qui peut être courbe, délimite la chambre de sortie 20 à l'intérieur du creuset de fusion 1. La paroi 23 est munie d'un passage 24 de quelques millimètres (par exemple 5mm) à sa partie inférieure pour permettre l'entrée du matériau fondu dans la chambre de sortie.

L'homogénéisation du matériau fondu avant son introduction dans le creuset de granulation 4 a, à la fois, pour conséquence de favoriser la dispersion des germes de cristallisation et la mise en suspension dans le matériau préalablement fondu de micro-impuretés, qui risqueraient de perturber l'écoulement du matériau fondu à travers les orifices 8, voire d'obstruer ceux-ci.

On observe qu'un dispositif ne comportant pas cette agitation par ultrasons produit des billes qui peuvent comporter, à leur surface, des cratères de dimensions et de profondeurs diverses, qui les rendent inadaptées à une utilisation en électronique. L'agitation par ultrasons selon l'invention permet d'atténuer considérablement ce type de défauts et généralement même de les faire disparaître totalement. L'agitation par ultrasons peut être réalisée de manière permanente. Elle peut également être effectuée seulement par intermittence sous le contrôle du circuit de commande 13. Il est à noter que le matériau fondu peut être transféré en continu de la chambre de sortie 20 vers le creuset de granulation 4, l'effet de l'homogénéisation se faisant ressentir sur l'état de surface des billes même si le matériau fondu doit rester en attente pendant un certain temps, à titre d'exemple jusqu'à 30mn, dans le creuset de granulation 4 avant son passage par les orifices 8.

Une autre mesure, permettant d'améliorer l'état de surface des billes obtenues, consiste agir sur la nature du gaz contenu dans la tour de refroidissement 16. En effet, celle-ci a une importance primordiale sur la sphéricité des billes, leur rapidité de solidification et leur état de surface. Selon un autre aspect de l'invention, on introduit dans le gaz inerte de la tour de refroidissement 16 une quantité prédéterminée d'oxygène, de préférence quelques ppm, par exemple de l'ordre de 15 à 150ppm. En l'absence d'oxygène dans le gaz inerte de la tour de refroidissement, les billes peuvent présenter à leur surface des micro-facettes, qui disparaissent si l'on introduit de l'oxygène dans le gaz inerte. Cependant, si la quantité d'oxygène est trop importante, les billes ne présentent pas toujours la sphéricité requise.

La combinaison de l'homogénéisation, par ultrasons dans la chambre de sortie, du matériau fondu et de l'introduction d'une quantité prédéterminée d'oxygène dans la tour de refroidissement permet d'optimiser l'état de surface de billes sphériques, notamment de microbilles formées à partir d'un alliage métallique de soudure.

La réception des billes à l'extrémité inférieure de la tour de refroidissement 16 est, de préférence, amortie pour éviter toute altération de l'état de surface des billes. Dans de nombreux dispositifs connus, les billes sont reçues dans un liquide. Ce type de réception a pour inconvénient de nécessiter un séchage ultérieur des billes.

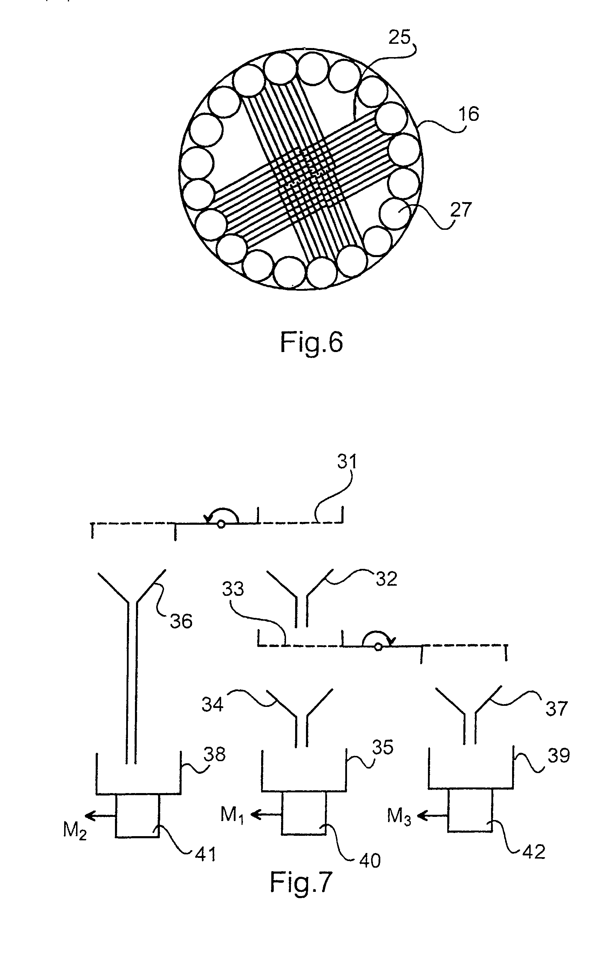

Dans le mode de réalisation préférentiel représenté aux figures 5 et 6, l'amortissement est effectué essentiellement par des brosses 25. Ceci permet d'éliminer tout liquide dans la zone de réception, toutes les phases du processus s'effectuant alors à sec. Chaque brosse 25 est constituée par des fils à base de polyamide dont une extrémité est fixée à proximité de la jonction de la partie inférieure verticale de la paroi interne de la tour de refroidissement et d'un cône de réception 26. Les fils font un angle d'environ 45° avec la trajectoire des billes dans la tour de refroidissement, c'est-à-dire sensiblement un angle de 45° avec la verticale. Dans un mode de réalisation particulier, quatre brosses 25 d'environ 10cm de large, opposées par paire, sont réparties le long de la périphérie de la tour de refroidissement, les extrémités libres des fils de deux brosses opposées se superposant. Le diamètre des fils est inférieur au diamètre des billes. La souplesse des brosses permet le passage des billes après amortissement, sans altérer leur état de surface.

L'amortissement des billes par les brosses 25 avant leur passage dans le cône de réception 26 peut être complété par l'utilisation de rouleaux 27, de préférence en toile à base de polyamide, disposés sur la périphérie inférieure de la paroi interne de la tour de refroidissement, au-dessus des brosses. Les rouleaux 27, qui peuvent être disposés verticalement (figures 5 et 6) tapissent la zone située immédiatement au-dessus des brosses. Tout choc d'une bille contre la paroi interne de la tour de refroidissement, qui peut éventuellement être provoqué par un rebond de la bille sur une brosse 25, est ainsi également amorti.

Le cône de réception 26 de la tour de refroidissement se prolonge par un sas 28 muni d'une vanne d'entrée 29 et d'une vanne de sortie 30, toutes deux contrôlées par le circuit de commande 13. Le sas permet d'extraire périodiquement les billes accumulées dans le cône de réception 26. Celles-ci passent alors dans un système de calibrage.

Dans le mode de réalisation particulier de la figure 7, les billes extraites (typiquement entre 100 et 300g/mn) tombent par gravité sur un tamis supérieur 31 qui retient les billes dont les dimensions sont supérieures à des normes prédéterminées. Les billes qui ont traversé le tamis supérieur 31 tombent, à travers un premier entonnoir 32, sur un tamis inférieur 33, qui laisse passer les billes top fines. Celles-ci tombent, à travers un second entonnoir 34, dans un premier bac 35. Les billes correspondant aux normes sont retenues dans le tamis inférieur 33. Par un basculement des tamis 31 et 33, on fait tomber les billes trop grosses et les billes correspondant aux normes, respectivement à travers des troisième et quatrième entonnoirs 36 et 37, respectivement dans des second et troisième bacs 38 et 39. Les billes sont ainsi triées en trois catégories, en fonction de leurs dimensions : les billes conformes dans le troisième bac 39, les billes trop fines dans le premier bac 35 et les billes trop grosses dans le second bac 38.

Des première, seconde et troisième balances 40, 41 et 42, placées respectivement sous les premier, second et troisième bacs 35, 38 et 39, fournissent au circuit de commande 13, pour chaque cycle d'extraction, des signaux M₁, M₂ et M₃, représentatifs du poids des billes recueillies respectivement dans les premier, second et troisième bacs. Le circuit de commande 13 détermine, à partir de ces informations de pesage, le pourcentage de billes extraites qui sont dans les normes et intervient sur les paramètres de granulation pour maintenir un rendement proche de 100%. Dans un mode de réalisation préféré, le circuit de commande 13 régule et ajuste notamment la fréquence du vibrateur 9. En effet, l'augmentation de la fréquence du vibrateur 9 tend à réduire les dimensions des billes. À titre d'exemple, pour une fréquence nominale du vibrateur de 500Hz, la variation peut porter sur ± 5Hz.

L'invention concerne également un dispositif de production de billes sphériques avec un dispositif de sélection de billes sphériques permettant de trier des billes de diamètre uniforme, de manière à écarter la totalité des billes qui ne sont pas parfaitement sphériques.

Il a déjà été proposé de trier des produits sphériques de différents diamètres ou présentant des malformations importantes au moyen d'un plan incliné, le tri s'effectuant en fonction des vitesses acquises par les différentes billes.

Ce type de tri est adapté au tri de billes ayant déjà, avant l'opération de tri, toutes le même diamètre, avec des tolérances étroites, mais dont la sphéricité varie, dans une plage relativement étroite. Le tri a alors pour but d'éliminer toutes les billes qui ne sont pas parfaitement sphériques et qui n'ont pas un état de surface parfait.

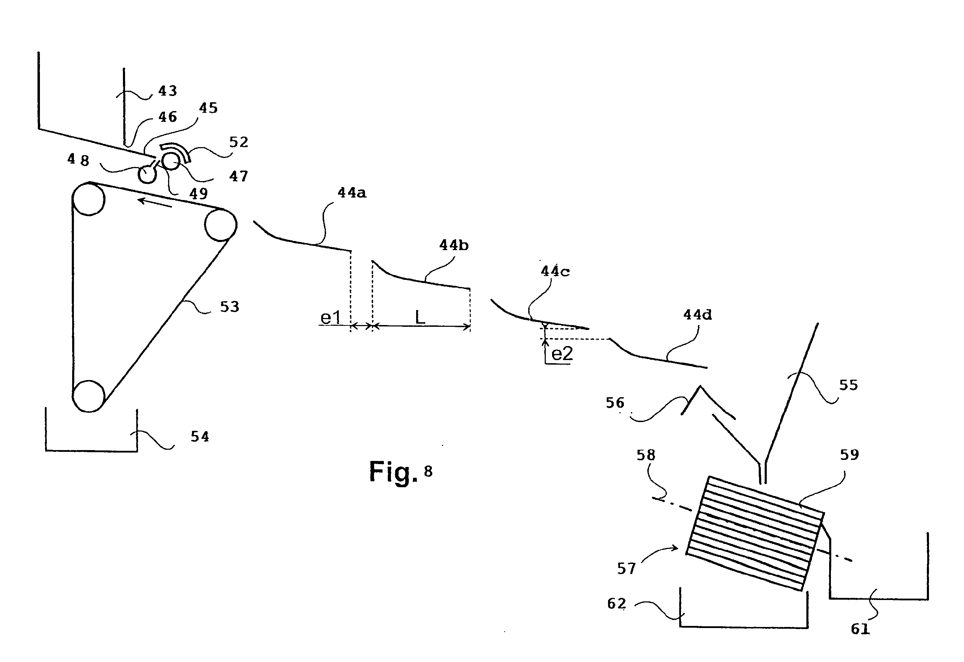

Dans le mode de réalisation représenté à la figure 8, le dispositif comporte un bac, sous la forme d'une trémie 43, dans lequel sont placées les billes à trier. Un tel bac est disposé en sortie du dispositif de production de billes sphériques décrit ci-dessus. Les billes sont amenées sur une succession de plans inclinés 44a, 44b, 44c et 44d. Chaque plan incliné est situé légèrement au-dessous du plan incliné précédent et un espace horizontal e1 sépare deux plans inclinés successifs. Les espaces vides entre les plans inclinés permettent d'éliminer les billes qui parviennent à l'extrémité d'un plan incliné sans avoir acquis une vitesse suffisante pour passer sur le plan incliné suivant sans tomber entre les deux plans inclinés successifs.

Les plans inclinés n'ont pas tous le même état de surface et celui-ci est parfaitement contrôlé pour chaque diamètre de billes à trier. En effet, la vitesse des billes dépend des effets combinés de plusieurs types de forces, notamment de la gravité, des forces de frottement, des forces aérodynamiques, de l'interaction avec les surfaces de roulement, etc... Les plans inclinés sont, de préférence, constitués par des tôles dont la surface a une rugosité contrôlée, plus importante pour au moins l'un des premiers plans inclinés, dans le sens de déplacement des billes. La rugosité du premier plan incliné 44a est supérieure à celle des plans inclinés suivants, de manière à ralentir de manière plus importante les billes présentant des défauts de surface. La trajectoire d'une telle bille sur une surface présentant, elle aussi, des défauts bien déterminés est en effet plus complexe, ce qui tend à ralentir la bille, provoquant sa chute entre les plans inclinés 44a et 44b par exemple. La présence d'une rugosité contrôlée n'a pas pour objectif d'augmenter la friction, qui pourrait provoquer une dégradation de l'état de surface des billes, mais de déstabiliser leurs trajectoires en fonction de leur irrégularité. Ceci permet aux billes bien sphériques de suivre des trajectoires plus directes et d'atteindre par conséquent des vitesses de sortie plus grandes.

Pour obtenir la rugosité désirée, la surface des plans inclinés est traitée par tout moyen approprié, par exemple par sablage, microbillage ou par tout autre moyen mécanique et/ou chimique, ou être recouvert d'un revêtement approprié, etc... Dans un mode de réalisation préférentiel, les deux premiers plans inclinés 44a et 44b présentent une rugosité importante, qui peut être plus faible pour le second. Le dernier plan incliné 44d, éventuellement les deux derniers plans inclinés 44c et 44d, peut avoir une surface parfaitement lisse. L'interaction entre les défauts de surface des billes et l'état de surface des plans inclinés permet ainsi d'éliminer rapidement les billes défectueuses.

La pente de chaque plan incliné et les espaces séparant deux plans inclinés successifs sont déterminés, en fonction du diamètre des billes, pour que les billes de très bonne sphéricité roulent sur les plans inclinés avec une vitesse suffisante pour passer d'un plan incliné au suivant. Chaque plan incliné comporte, à sa partie amont, une courbure, vers le haut, destinée à atténuer les chocs à la réception des billes sur le plan incliné et à éviter tout rebond des billes.

À titre d'exemple, pour la sélection de microbilles d'alliage de soudure, dont le diamètre est typiquement inférieur à 500µm, chaque plan incliné a, en projection sur l'horizontale, une longueur L, qui peut être de l'ordre de 10 à 15cm, et une largeur qui peut être de l'ordre d'1m. L'espace vertical e2 séparant deux plans inclinés successifs peut être inférieur ou égal à 1cm, tandis que l'espace horizontal e1 peut être de l'ordre de 1cm à 3cm. Le nombre de plans inclinés est inversement proportionnel à la taille des billes, de préférence compris entre 2 et 5. Par ailleurs, plus les billes sont lourdes, plus elles roulent vite. En conséquence, l'inclinaison des plans inclinés doit être faible pour permettre une bonne sélection.

Les billes sortant de la trémie 43 sont amenées sur le premier plan incliné 44a par l'intermédiaire d'un plan de roulement 45, légèrement incliné, prolongeant le fond de la trémie 43. Les billes sortent à la base de la trémie 43 par un passage étroit 46, sous l'action des forces de gravité, de manière à constituer une seule couche de billes roulant sur le plan de roulement. À l'extrémité libre du plan de roulement 45, les billes viennent en butée contre une butée 47. Sur les figures 8 à 10, la butée 47 est constituée par un cylindre disposé au moins sur toute la largeur du plan de roulement 45, perpendiculairement au sens d'écoulement des billes sur le plan de roulement 45. Les billes s'alignent ainsi devant la butée 47. Un espace, inférieur au diamètre d'une bille, sépare l'extrémité libre du plan de roulement 45 de la butée 47.

Les billes alignées devant la butée 47 sont éjectées par saccades du plan de roulement. L'éjection est, de préférence, réalisée par une rampe 48, constituée par un tube creux dans lequel circule en continu un flux d'air sec comprimé ou de gaz inerte (azote, argon, etc...). La rampe 48 est disposée parallèlement à la butée 47, au-dessous de l'extrémité libre du plan de roulement 45. Elle comporte une pluralité de buses d'air 49, dirigées vers l'espace compris entre l'extrémité libre du plan de roulement et la butée, réparties uniformément le long de la rampe 48 et constituant des éjecteurs destinés à soulever, de préférence par saccades, la rangée de billes alignées devant la butée 47.

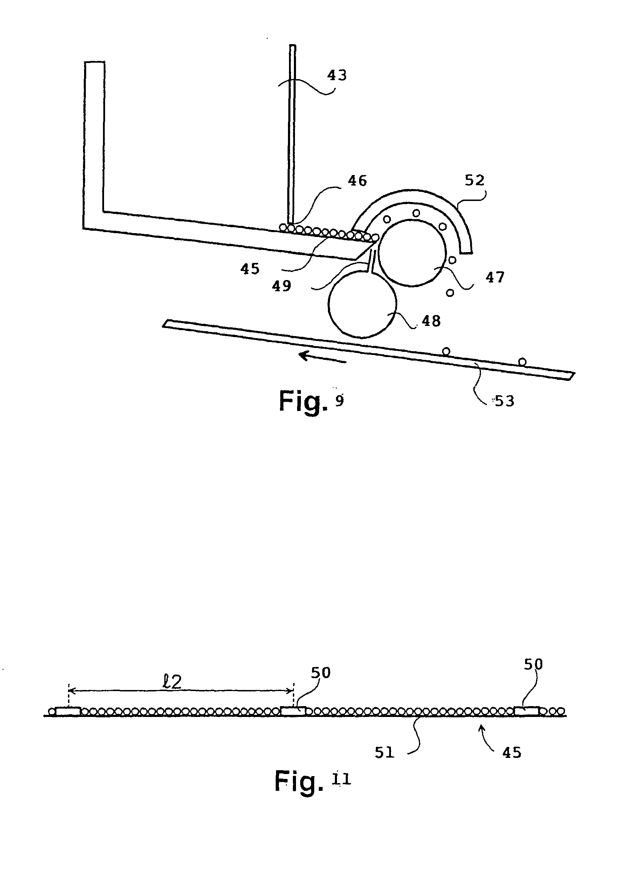

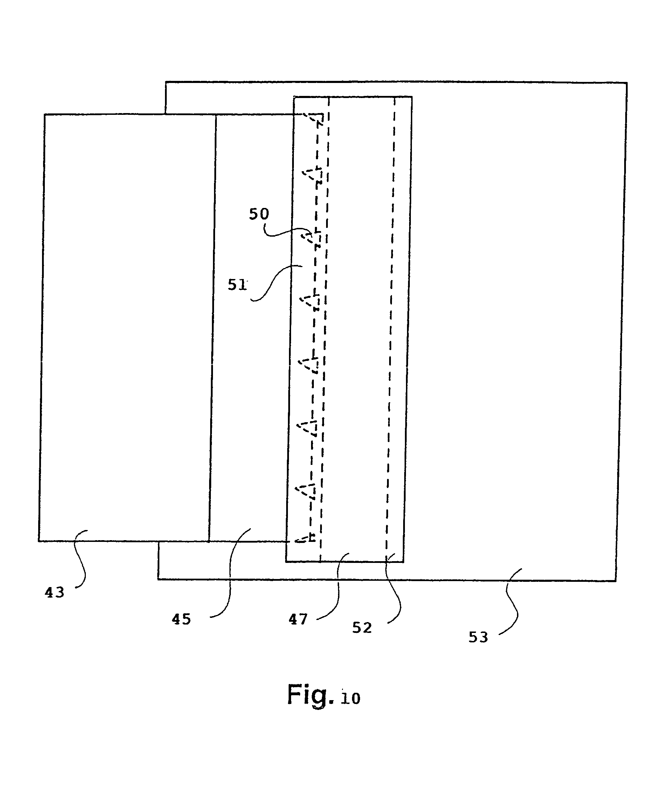

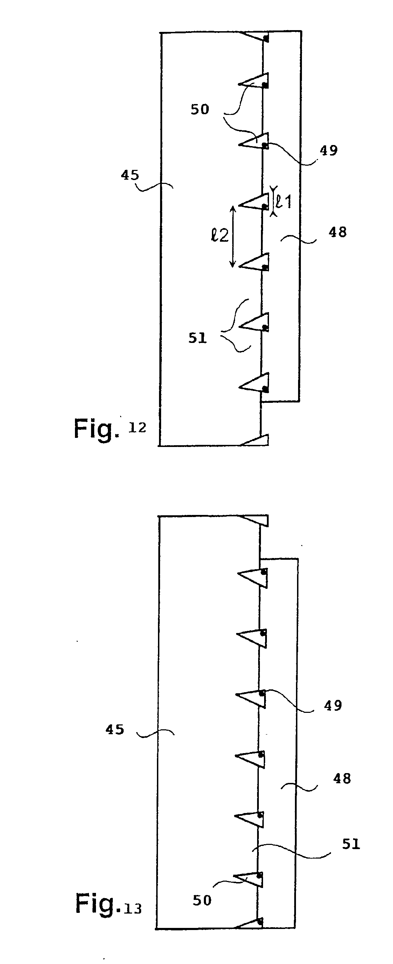

Pour assurer l'éjection des billes par saccades, la rampe 48 est animée, par un vérin (non représenté), d'un mouvement latéral de va-et-vient, perpendiculairement à la direction d'écoulement des billes (de gauche à droite sur les figures 10, 12 et 13) sur le plan de roulement 45. Les positions respectives de la rampe 48 et du plan de roulement 45 pour deux positions extrêmes de la rampe lors de son mouvement de va-et-vient sont représentées aux figures 12 et 13. Le plan de roulement 45 comporte, au moins à son extrémité libre, des obstacles 50, d'épaisseur uniforme (figure 11), triangulaires en vue de dessus, qui le divisent en une pluralité de couloirs 51 de largeur décroissante. Les obstacles 50 font très légèrement saillie à l'extrémité libre du plan de roulement. La base de la section triangulaire d'un obstacle 50, parallèle à l'extrémité libre du plan de roulement 45, a une longueur I1, et les sommets de deux obstacles adjacents sont séparés par une distance l2 (figure 12). Les angles de base des obstacles triangulaires 50 constituent les limites du déplacement des buses d'air 49 dans les deux positions extrêmes de la rampe 48 (figures 12 et 13).

Ainsi, en fin de course, lorsque la rampe 48 est dans l'une de ces positions extrêmes, toutes les buses d'air 49 sont placées sous une extrémité d'un obstacle 50. Les jets d'air sortant de la rampe 48 par les buses d'air 49 sont alors canalisés sous les obstacles 50 et ne peuvent éjecter les billes disposées dans les couloirs 51, sur le plan de roulement 45. Par contre, lors du déplacement de la rampe 48, les jets d'air sortant des buses d'air associées à chacun des couloirs provoquent l'éjection de la rangée de billes venant en butée contre la butée 47. L'éjection se fait de manière progressive au fur et à mesure du déplacement des buses d'air. Un temps d'arrêt de la rampe aux deux extrémités permet d'obtenir une éjection intermittente, par saccades, permettant ainsi de libérer totalement la place, en aval, avant l'éjection d'une nouvelle rangée de billes et limitant les interactions entre les billes susceptibles d'altérer leur état de surface. La quantité de billes présentes sur chaque zone de roulement est ainsi régulée et limitée.

Dans un mode de réalisation préférentiel 8 obstacles délimitent 7 couloirs 51. La longueur I1 de la base triangulaire des obstacles 50 peut être de l'ordre de 20 à 30mm, pour une distance I2 de l'ordre de 130mm. La durée de déplacement de la rampe entre ses deux positions extrêmes peut, par exemple, être comprise entre 1s et quelques secondes (fréquence comprise entre 0,1 et 1Hz).

Les billes éjectées sont dirigées par un déflecteur 52 sur une face inclinée d'un tapis roulant 53. Le déflecteur 52, de préférence de forme courbe, délimite avec la butée 47 un passage pour les billes éjectées, qui tombent alors sur une face inclinée du tapis roulant 53, disposé au-dessous de l'ensemble constitué par le plan de roulement 45, la butée 47, la rampe 48 et le déflecteur 52. La face du tapis roulant sur laquelle tombent les billes éjectées est inclinée dans le même sens que les plans inclinés 44a à 44d. Le sens de rotation du tapis roulant 53 est opposé au sens de roulement des billes sur cette face du tapis roulant (figure 8).

Les billes ayant une bonne sphéricité roulent sur la face inclinée du tapis roulant, en direction du premier plan incliné 44a. La vitesse de déplacement du tapis roulant est choisie de manière à ce que les billes sphériques roulant sur sa face inclinée en sens inverse de son déplacement atteignent le premier plan incliné. À titre d'exemple, la vitesse du tapis roulant peut être de l'ordre de 0,5 à 5m/mn, de préférence 2m/mn. Le tapis roulant fait une première sélection. En effet, les billes comportant de gros défauts de surface ou les billes doubles, qui ne peuvent pas rouler ou roulent trop lentement sur la face inclinée du tapis roulant, sont évacuées vers l'arrière par le tapis roulant et tombent dans un premier bac 54, tandis que les billes présentant une bonne sphéricité roulent, en sens inverse, jusque sur le premier plan incliné.

À la sortie du dernier plan incliné 44d, les billes sélectionnées tombent dans une trémie 55. Une réglette mobile 56 peut être disposée entre le dernier plan incliné 44d et la trémie 55, de manière à effectuer une dernière sélection entre les billes avant leur réception dans la trémie. Sur la figure 8, la réglette 56 comporte une arête supérieure reliant deux parois dont l'une dirige les billes les plus rapides vers la trémie 56, tandis que l'autre évacue les billes plus lentes, qui tombent en amont de l'arête supérieure.

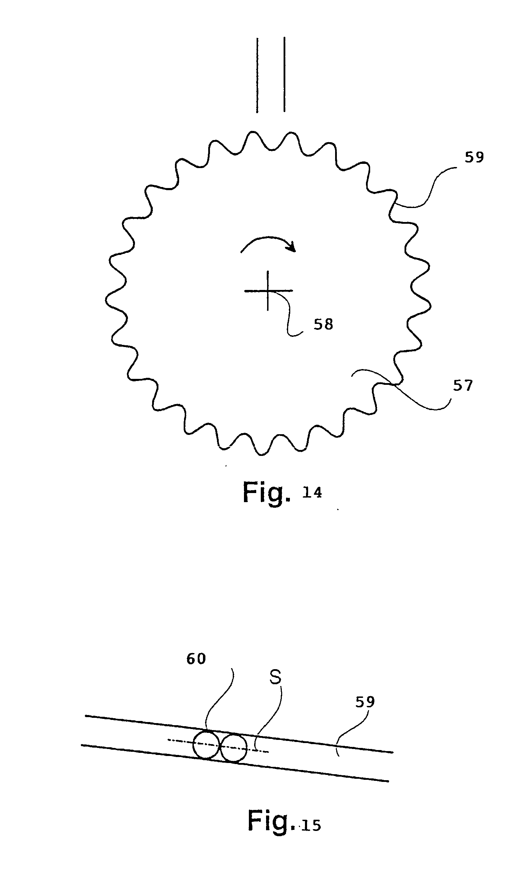

Le dispositif de sélection décrit ci-dessus permet de sélectionner des billes sphériques de diamètre uniforme en fonction de leur état de surface. Seules les billes ayant un état de surface parfait arrivent jusqu'à la trémie 55. Cependant, il peut arriver que des billes collées atteignent la trémie 55. En pratique, sur environ un million de billes, 2 ou 3 paires de billes collées parviennent jusqu'à la trémie. C'est le cas notamment lorsqu'une paire 60 de billes collées tombe sur le tapis roulant 53, puis sur les différents plans inclinés, de manière à ce que le roulement de la paire ne soit pas ralenti, par exemple lorsque l'axe S de symétrie longitudinal de la paire (figure 15) est parfaitement perpendiculaire au sens de déplacement des billes. Pour éliminer également les billes collées susceptibles d'atteindre la trémie 55, le dispositif est, de préférence, complété par une roue dentée 57 de diamètre important, par exemple de l'ordre de 30cm, disposée en aval des plans inclinés.

Dans le mode de réalisation particulier de la figure 8, la trémie 55, en forme d'entonnoir, permet l'écoulement des billes sur la partie supérieure de la roue dentée 57. Celle-ci est animée d'un lent mouvement de rotation autour d'un axe incliné 58 et comporte des rainures longitudinales 59 dont les dimensions permettent le roulement d'une bille isolée et empêchent le roulement d'une paire 60 de billes collées (figures 14 et 15). Les billes sans défaut roulent dans les rainures 59 de la roue dentée et sont récoltées dans un second bac 61 disposé en aval de la roue dentée. Les paires 60 de billes collées bloquées dans les rainures tournent avec la roue dentée autour de l'axe 58 et tombent par gravité dans un troisième bac 62 lorsque la roue dentée a effectué un demi-tour et que la rainure dans laquelle se trouve la paire 60 a atteint la partie inférieure de la roue dentée, au-dessus du troisième bac.

La roue dentée 57 comporte, de préférence, plusieurs centaines de rainures. Le fond des rainures 59 a environ de 1,2 à 1,5 fois le diamètre des billes, de manière à ce qu'une paire de billes collées ne puisse pas se placer perpendiculairement à la rainure et rouler dans celle-ci. Pour faciliter le dépôt des billes dans les rainures 59, le sommet des dents de la roue dentée est, de préférence, pointu avec un léger arrondi.

Un déflecteur (non représenté) en forme d'arc de cercle épousant le diamètre extérieur de la roue dentée peut être placé perpendiculairement aux rainures 59, de manière à servir de barrière en cas d'engorgement à la sortie de la trémie 55.

L'invention n'est pas limitée aux modes de réalisation particuliers représentés. En particulier, le nombre et la disposition des orifices 8 peuvent être différents de ceux représentés sur les figures. De même, le tri et le pesage des billes à la sortie de la tour de refroidissement peuvent être réalisés par tout autre moyen approprié susceptible de séparer les billes répondant aux normes des autres billes et de fournir les informations recherchées. Le nombre et la disposition des tamis, des entonnoirs et des bacs peut être différent de ce qui est représenté. Le circuit de commande 13 reçoit, de préférence, des signaux représentatifs des divers paramètres susceptibles d'avoir une influence sur les billes produites par le dispositif et contrôle les divers organes susceptibles d'influencer ces paramètres. Il reçoit ainsi notamment, par tout moyen approprié, outre les signaux M₁, M₂ et M₃, des signaux de mesure de la pression P et de la température ϑ dans les creusets 1 et 4 ainsi que dans la tour de refroidissement 16. Il contrôle notamment l'entrée du matériau 3 en provenance du sas d'alimentation 2, l'extraction des billes par le sas 28, le dispositif vibrant 22, le vibrateur 9, le chauffage des creusets 1 et 4, la pression gazeuse à l'intérieur des creusets et de la tour de refroidissement et la quantité d'oxygène contenue dans la tour de refroidissement.

La forme, les dimensions, la disposition et le nombre des plans inclinés du dispositif de sélection peut être adapté aux dimensions des billes à sélectionner. La butée 47 peut ne pas être cylindrique. Les formes courbes sont néanmoins avantageuses, des arêtes vives risquant de détériorer l'état de surface des billes.

## Revendications

1. Dispositif de production de billes sphériques comportant :
- des moyens d'introduction, dans un récipient de fusion (1), de matériau destiné à constituer les billes,
- un second récipient (4) communiquant avec le récipient de fusion (1) de manière à recevoir le matériau fondu,
- des moyens pour former, à partir du matériau fondu contenu dans le second récipient, un jet (14) à travers au moins un orifice (8),
- des moyens de vibration (9, 10, 11) pour transmettre des vibrations à l'orifice (8), de manière à transformer le jet (14) en gouttelettes (15),
- une tour de refroidissement (16), disposée à la sortie de l'orifice (8) et remplie d'un gaz inerte, dans laquelle les gouttelettes (15), tombant par gravité, se solidifient pour former les billes,
- et des moyens de réception des billes à une extrémité inférieure de la tour de refroidissement (16),
dispositif **caractérisé en ce qu'**il comporte une chambre de sortie (20) dans le récipient de fusion (1) et des moyens (21, 22) d'agitation par ultrasons du matériau fondu contenu dans la chambre de sortie (20) avant son transfert dans le second récipient (4), le gaz inerte contenu dans la tour de refroidissement (16) contenant une quantité prédéterminée d'oxygène

2. Dispositif selon la revendication 1, **caractérisé en ce que** la quantité d'oxygène contenue dans le gaz inerte de la tour de refroidissement (16) est de l'ordre de 15 à 150 ppm.

3. Dispositif selon l'une des revendications 1 et 2, **caractérisé en ce que** le volume de la chambre de sortie (20) est inférieur à environ 20% du volume du récipient de fusion (1).

4. Dispositif selon l'une quelconque des revendications 1 à 3, **caractérisé en ce que** le récipient de fusion (1) comporte une paroi (23) délimitant la chambre de sortie (20), ladite paroi (23) étant munie d'un passage (24) à sa partie inférieure pour permettre l'entrée du matériau fondu dans la chambre de sortie (20).

5. Dispositif selon l'une quelconque des revendications 1 à 3, **caractérisé en ce que** les moyens d'agitation par ultrasons comportent un barreau (21) plongeant dans le matériau fondu de la chambre de sortie et animé d'un mouvement vertical de va-et-vient.

6. Dispositif selon l'une quelconque des revendications 1 à 5, **caractérisé en ce que** l'orifice (8) est réalisé en un matériau non mouillable par le matériau fondu.

7. Dispositif selon l'une quelconque des revendications 1 à 6, **caractérisé en ce que** les moyens de réception des billes comportent des moyens d'amortissement.

8. Dispositif selon la revendication 7, **caractérisé en ce que** les moyens d'amortissement comportent des brosses (25) constituées par des fils à base de polyamide, faisant un angle d'environ 45° avec la trajectoire des billes dans la tour de refroidissement (16).

9. Dispositif selon la revendication 8, **caractérisé en ce que** les moyens d'amortissement comportent des rouleaux (27) en toile disposés sur la périphérie inférieure de la paroi interne de la tour de refroidissement (16), au-dessus des brosses (25).

10. Dispositif selon l'une quelconque des revendications 1 à 9, **caractérisé en ce qu'**il comporte, à la sortie de la tour de refroidissement (16), des moyens (28, 29, 30) d'extraction périodique des billes et des moyens de calibrage comportant des moyens (31, 33) de tri des billes en trois catégories, en fonction de leurs dimensions.

11. Dispositif selon la revendication 10, **caractérisé en ce qu'**il comporte des moyens (40, 41, 42) de pesage de l'ensemble des billes de chaque catégorie obtenues à chaque séquence d'extraction, des moyens (13) de détermination, à partir d'informations (M₁, M₂, M₃) fournies par les moyens de pesage, d'un pourcentage de billes dans des normes prédéterminées et des moyens d'ajustement de la fréquence des moyens de vibration (9) en fonction dudit pourcentage.

12. Dispositif selon l'une quelconque des revendications 1 à 11, **caractérisé en ce qu'**il comporte un dispositif de sélection comportant des moyens d'amenée des billes sur un premier plan incliné (44a) d'une succession de plans inclinés (44a, 44b, 44c, 44d), séparés par des espaces (e1, e2) de dimensions prédéterminées, au moins le premier plan incliné (44a), dans le sens de déplacement des billes, ayant une surface dont la rugosité est plus importante que celle des plans inclinés suivants.

13. Dispositif selon la revendication 12, **caractérisé en ce qu'**au moins le dernier plan incliné (44d) a une surface parfaitement lisse.

14. Dispositif selon l'une des revendications 12 et 13, **caractérisé en ce que** les moyens d'amenée des billes sur le premier plan incliné comportent un plan de roulement (45), des moyens de butée (47), des moyens d'éjection (48, 49) pour éjecter du plan de roulement, par saccades, les billes venant en butée contre les moyens de butée.

15. Dispositif selon la revendication 14, **caractérisé en ce que** les moyens d'éjection comportent une rampe creuse (48), animée d'un mouvement latéral de va-et-vient et munie d'une pluralité d'éjecteurs d'air (49) répartis uniformément le long de la rampe.

16. Dispositif selon l'une quelconque des revendications 12 à 15, **caractérisé en ce que** les moyens d'amenée des billes sur le premier plan incliné (44a) comportent un tapis roulant (53) ayant une face inclinée dans la même direction que les plans inclinés et un sens de rotation opposé au sens de roulement des billes sur ladite face.

17. Dispositif selon la revendication 16, **caractérisé en ce que** les moyens d'amenée des billes sur le premier plan incliné (44a) comportent des moyens déflecteurs (52) pour diriger les billes éjectées sur la face inclinée du tapis roulant (53).

18. Dispositif selon l'une quelconque des revendications 12 à 17, **caractérisé en ce qu'**il comporte, en aval des plans inclinés (44a, 44b, 44c, 44d), une roue dentée (57) animée d'un mouvement de rotation autour d'un axe incliné (58) et comportant des rainures longitudinales (59) dont les dimensions permettent le roulement d'une bille isolée et empêchent le roulement d'une paire (60) de billes collées.

19. Dispositif selon la revendication 18, **caractérisé en ce qu'**il comporte des premiers moyens de réception (61) pour les billes sans défaut roulant dans les rainures (59) de la roue dentée (57), les paires (60) de billes collées bloquées dans les rainures (59) tombant par gravité dans des seconds moyens de réception (62) au cours de la rotation de la roue dentée (57).

## Claims

1. Device for producing spherical balls comprising :
- means for feeding, in a fusion vessel (1), material intended to form the balls,
- a second vessel (4) communicating with the fusion vessel (1) in order to receive the melted material,
- means to form, out of the melted material contained in the second vessel, a jet (14) through at least one orifice (8),
- vibrating means (9, 10, 11) to transmit vibrations to the orifice (8), in order to transform the jet (14) into droplets (15),
- a cooling tower (16), arranged at the outlet of the orifice (8) and filled with an inert gas, wherein the droplets (15), falling by gravity, solidify to form the balls,
- and means for receiving balls at a lower end of the cooling tower (16),
device **characterised in that** it comprises an outlet chamber (20) in the fusion vessel (1) and means (21, 22) for ultrasound stirring of the melted material contained in the outlet chamber (20) before its transfer to the second vessel (4), the inert gas contained in the cooling tower (16) containing a pre-set quantity of oxygen.

2. Device according to claim 1, **characterised in that** the quantity of oxygen contained in the inert gas of the cooling tower (16) is in the order of 15 to 150 ppm.

3. Device according to one of claims 1 and 2, **characterised in that** the volume of the outlet chamber (20) is smaller than approximately 20% of the volume of the fusion vessel (1).

4. Device according to any one of claims 1 to 3, **characterised in that** the fusion vessel (1) comprises a wall (23) delineating the outlet chamber (20), said wall (23) being fitted with a passage (24) at its lower section to enable the melted material to enter the outlet chamber (20).

5. Device according to any one of claims 1 to 3, **characterised in that** the ultrasound stirring means comprise a bar (21) immersed in the melted material of the outlet chamber and animated with a vertical back and forth movement.

6. Device according to any one of claims 1 to 5, **characterised in that** the orifice (8) is made of a material that cannot be wetted by the melted material.

7. Device according to any one of claims 1 to 6, **characterised in that** the means for receiving balls comprise shock-absorbing means.

8. Device according to claim 7, **characterised in that** the shock-absorbing means comprise brushes (25) composed of polyamide-based wires, forming an angle of approximately 45° with the trajectory of the balls in the cooling tower (16).

9. Device according to claim 8, **characterised in that** the shock-absorbing means comprise fabric rollers (27) arranged on the lower periphery of the inner wall of the cooling tower (16), above the brushes (25).

10. Device according to any one of claims 1 to 9, **characterised in that** it comprises, at the outlet of the cooling tower (16), means (28, 29, 30) for periodical extraction of the balls and calibration means comprising means (31, 33) for sorting the balls into three categories, according to their sizes.

11. Device according to claim 10, **characterised in that** it comprises means (40, 41, 42) for weighing all the balls of each category obtained at each extraction sequence, means (13) for determining, on the basis of information (M₁, M₂, M₃) supplied by the weighing means, a percentage of balls within pre-set standards and means for adjusting the frequency of the vibrating means (9) in relation to said percentage.

12. Device according to any one of claims 1 to 11, **characterised in that** it comprises a selection device comprising means for supplying the balls on a first tilted plane (44a) of a succession of tilted planes (44a, 44b, 44c, 44d), separated by spaces (e1, e2) of pre-set sizes, at least the first tilted plane (44a), in the direction of displacement of the balls, having a surface with a roughness which is greater than that of the following tilted planes.

13. Device according to claim 12, **characterised in that** at least the last tilted plane (44d) has a perfectly smooth surface.

14. Device according to one of claims 12 and 13, **characterised in that** the means for supplying the balls on the first tilted plane comprise a rolling plane (45), stop means (47), ejection means (48, 49) to eject from the rolling plane, jerkily, the balls resting against the stop means.

15. Device according to claim 14, **characterised in that** the ejection means comprise a hollow ramp (48), animated with a lateral back and forth movement and fitted with a plurality of air ejectors (49) distributed uniformly along the ramp.

16. Device according to any one of claims 12 to 15, **characterised in that** the means for supplying the balls on the first tilted plane (44a) comprise a conveyor belt (53) having a face which is tilted in the same direction as the tilted planes and a rotational direction opposite the rolling direction of the balls on said face.

17. Device according to claim 16, **characterised in that** the means for supplying the balls on the first tilted plane (44a) comprise deflector means (52) to direct the ejected balls on the tilted face of the conveyor belt (53).

18. Device according to any one of claims 12 to 17, **characterised in that** it comprises, downstream of the tilted planes (44a, 44b, 44c, 44d), a toothed wheel (57) animated with a rotational movement about a tilted axis (58) and comprising longitudinal grooves (59) having sizes enabling an isolated ball to roll and preventing a pair (60) of stuck balls from rolling.

19. Device according to claim 18, **characterised in that** it comprises first reception means (61) for the faultless balls rolling into the grooves (59) of the toothed wheel (57), whereas the pairs (60) of stuck balls blocked in the grooves (59) fall by gravity into second reception means (62) during the rotation of the toothed wheel (57).

## Patentansprüche

1. Anlage zur Herstellung sphärischer Kugeln, die umfasst:
- Mittel zum Einbringen von Material, aus dem die Kugeln entstehen sollen, in einen Schmelzbehälter (1),
- einen zweiten Behälter (4), der mit dem Schmelzbehälter (1) so verbunden ist, dass er die Schmelze aufnehmen kann,
- Mittel zur Bildung eines Strahls (14) aus der in dem zweiten Behälter enthaltenen Schmelze durch mindestens eine Öffnung (8),
- Mittel zum Rütteln (9, 10, 11) zum Übertragen von Rüttelbewegungen auf die Öffnung (8), damit der Strahl (14) in Tröpfchen (15) umgewandelt wird,
- einen Kühlturm (16), der am Ausgang der Öffnung (8) angeordnet und mit einem Inertgas gefüllt ist, in dem die Tröpfchen (15), die durch Schwerkraft herabfallen, aushärten und dann Kugeln bilden,
- und Mittel zur Aufnahme der Kugeln an einem unteren Ende des Kühlturms (16),
Anlage, die **dadurch gekennzeichnet ist, dass** sie eine Austrittskammer (20) in dem Schmelzbehälter (1) und Mittel (21, 22) zum Umrühren der in der Austrittskammer (20) enthaltenen Schmelze mit Ultraschall vor deren Übergang in den zweiten Behälter (4) umfasst, wobei das in dem Kühlturm (16) enthaltene Inertgas einen vorbestimmten Anteil an Sauerstoff enthält.

2. Anlage nach Anspruch 1, **dadurch gekennzeichnet, dass** der in dem Inertgas des Kühlturms (16) enthaltene Sauerstoffanteil etwa 15 bis 150 ppm beträgt.

3. Anlage nach einem der Ansprüche 1 und 2, **dadurch gekennzeichnet, dass** das Volumen der Austrittskammer (20) etwa 20 % niedriger als das des Schmelzbehälters (1) ist.

4. Anlage nach einem der Ansprüche 1 bis 3, **dadurch gekennzeichnet, dass** der Schmelzbehälter (1) eine Wand (23) umfasst, welche die Austrittskammer (20) begrenzt, welche Wand (23) in ihrem unteren Bereich mit einem Durchlass (24) versehen ist, um das Einlaufen der Schmelze in die Austrittskammer (20) zu ermöglichen.

5. Anlage nach einem der Ansprüche 1 bis 3, **dadurch gekennzeichnet, dass** die Ultraschall-Rüttelmittel eine Stange (21) umfassen, die in die Schmelze der Austrittskammer eingetaucht und vertikal hin und her bewegt wird.

6. Anlage nach einem der Ansprüche 1 bis 5, **dadurch gekennzeichnet, dass** die Öffnung (8) aus einem Material hergestellt ist, das mit der Schmelze nicht benetzbar ist.

7. Anlage nach einem der Ansprüche 1 bis 6, **dadurch gekennzeichnet, dass** die Aufnahmevorrichtungen für die Kugeln Stoßdämpfungsmittel umfassen.

8. Anlage nach Anspruch 7, **dadurch gekennzeichnet, dass** die Stoßdämpfungsmittel Bürsten (25) umfassen, die aus Borsten auf Polyamidbasis bestehen und einen Winkel von etwa 45° zur Bahn der Kugeln in dem Kühlturm (16) bilden.

9. Anlage nach Anspruch 8, **dadurch gekennzeichnet, dass** die Stoßdämpfungsmittel Walzen (27) aus Gewebe umfassen, die am unteren Umfang der Innenwand des Kühlturms (16) über den Bürsten (25) angeordnet sind.

10. Anlage nach einem der Ansprüche 1 bis 9, **dadurch gekennzeichnet, dass** sie am Austritt des Kühlturms (16) Mittel (28, 29, 30) zum periodischen Austragen der Kugeln sowie Kalibrierungsmittel umfasst, die Mittel (31, 33) zum Trennen der Kugeln je nach ihrer Größe in drei Kategorien aufweist.

11. Anlage nach Anspruch 10, **dadurch gekennzeichnet, dass** sie Mittel (40, 41, 42) zum Wiegen aller bei jeder Entnahmesequenz erhaltenen Kugeln jeder Kategorie, Mittel (13) zur Bestimmung eines prozentualen Anteils in vorbestimmten Normen ausgehend von von den Wiegemitteln übertragenen Daten (M₁, M₂, M₃) sowie Mittel zum Anpassen der Frequenz der Mittel zum Rütteln (9) in Abhängigkeit von diesem prozentualen Anteil umfasst.

12. Anlage nach einem der Ansprüche 1 bis 11, **dadurch gekennzeichnet, dass** sie eine Selektionsvorrichtung umfasst, die Mittel zum Zuführen der Kugeln auf eine erste schiefe Ebene (44a) einer Folge schiefer Ebenen (44a, 44b, 44c, 44d) umfasst, die durch Zwischenräume (e1, e2) vorbestimmter Abmessungen getrennt sind, wobei mindestens die erste schiefe Ebene (44a) in Bewegungsrichtung der Kugeln eine Oberfläche hat, die rauer ist als die der folgenden schiefen Ebenen.

13. Anlage nach Anspruch 12, **dadurch gekennzeichnet, dass** mindestens die letzte schiefe Ebene (44d) eine vollkommen glatte Oberfläche hat.

14. Anlage nach einem der Ansprüche 12 und 13, **dadurch gekennzeichnet, dass** die Mittel zum Zuführen der Kugeln auf die erste schiefe Ebene eine Rollebene (45), Anschlagmittel (47), Auswurfmittel (48, 49) zum stoßweisen Auswerfen der an die Anschlagmittel anschlagenden Kugeln von der Rollebene umfassen.

15. Anlage nach Anspruch 14, **dadurch gekennzeichnet, dass** die Auswurfmittel eine hohle Rampe (48) umfassen, die seitlich hin und her bewegt wird und mit mehreren Luftstrahldüsen (49) versehen ist, die gleichmäßig entlang der Rampe verteilt sind.

16. Anlage nach einem der Ansprüche 12 bis 15, **dadurch gekennzeichnet, dass** die Mittel zum Zuführen der Kugeln auf die erste schiefe Ebene (44a) ein Förderband (53) umfassen, das eine Seite hat, die in gleicher Richtung geneigt ist wie die schiefen Ebenen und eine Drehrichtung hat, die entgegengesetzt zur Rollrichtung der Kugeln auf der genannten Seite ist.

17. Anlage nach Anspruch 16, **dadurch gekennzeichnet, dass** die Mittel zum Zuführen der Kugeln auf die erste schiefe Ebene (44a) Ablenkmittel (52) zum Führen der ausgeworfenen Kugeln auf die geneigte Seite des Förderbands (53) umfassen.

18. Anlage nach einem der Ansprüche 12 bis 17, **dadurch gekennzeichnet, dass** sie nach den schiefen Ebenen (44a, 44b, 44c, 44d) ein Zahnrad (57) umfasst, das eine Drehbewegung um eine schräg abfallende Achse (58) ausführt und mit Längsrillen (59) versehen ist, deren Abmessungen das Rollen einer einzelnen Kugel ermöglicht und das Rollen eines Paars (60) aneinander haftender Kugeln verhindert.

19. Anlage nach Anspruch 18, **dadurch gekennzeichnet, dass** sie erste Aufnahmemittel (61) für die fehlerfreien Kugeln umfasst, die in den Rillen (59) des Zahnrads (57) rollen, wobei die Paare (60) aneinander haftender, in den Rillen (59) blockierter Kugeln während der Drehung des Zahnrads (57) durch Schwerkraft in zweite Aufnahmevorrichtungen (62) fallen.
